(19) Europäisches Patentamt
European Patent Office
Office européen des brevets

(11) **EP 0 584 301 B1**

(12) **EUROPÄISCHE PATENTSCHRIFT**

(45) Veröffentlichungstag und Bekanntmachung des Hinweises auf die Patenterteilung:
**03.04.1996 Patentblatt 1996/14**

(21) Anmeldenummer: 93903772.7

(22) Anmeldetag: **22.02.1993**

(51) Int. Cl.$^6$: **B01F 11/00**

(86) Internationale Anmeldenummer: **PCT/CH93/00044**

(87) Internationale Veröffentlichungsnummer:
**WO 93/18850 (30.09.1993 Gazette 1993/24)**

(54) **MISCHMASCHINE**

MIXING MACHINE

MACHINE A MELANGER

(84) Benannte Vertragsstaaten:
**AT CH DE FR IT LI**

(30) Priorität: **16.03.1992 CH 849/92**

(43) Veröffentlichungstag der Anmeldung:
**02.03.1994 Patentblatt 1994/09**

(73) Patentinhaber: **Bioengineering AG**
**CH-8636 Wald (CH)**

(72) Erfinder: **MEYER, Pio**
**CH-8636 Wald (CH)**

(74) Vertreter: **Salgo, Reinhold Caspar, Dr. et al**
**Patentanwalt**
**Toebelistrasse 88**
**CH-8635 Duernten (CH)**

(56) Entgegenhaltungen:
**EP-A- 0 176 749**          **CH-A- 544 571**

• **Derwent's abstract, no 91-228 679/31, Woche 9131, Zusammenfassung von SU 1 607 922, (GUZANOV V N), 1990-11-23**

## Beschreibung

Die vorliegende Erfindung bezieht sich auf eine nach dem Inversionsprinzip arbeitende Mischmaschine gemäss dem Oberbegriff des Patentanspruches 1.

Antriebe für solche Mischmaschinen sind mehrere bekannt; mechanische beispielsweise aus CH A5 645 550 und EP 0 249 600 und ein hydraulischer aus dem EP 0 176 749.

Das grundsätzliche Problem, das allen genannten Erfindungen, auch der vorliegenden, zugrunde liegt, ist die ungleichförmige Umdrehungsgeschwindigkeit der zwei Antriebsachsen, die nach dem Inversionsprinzip nach Paul Schatz arbeitende Mischmaschinen aufweisen.

Es zeigt sich, dass die rein mechanischen Lösungen, die zu diesem Problem gefunden werden, ausserordentlich aufwendig sind, sei es die reine Anzahl, sei es die Ausgestaltung der beteiligten Maschinenelemente. So war der in der EP 0 176 749 beschriebene hydraulische Antrieb bereits ein grosser Fortschritt gegenüber den rein mechanischen, einerseits dadurch, dass der notwendige Aufwand an mechanischen Präzisionsteilen stark reduziert werden konnte, anderseits dadurch, dass durch den annähernd konstanten Oeldruck die an den Achsen herrschenden Drehmomente ebenfalls annähernd konstant bleiben.

Hingegen ist der Aufwand immer noch beträchtlich und kostenwirksam, da zur Erzeugung des unter Druck geförderten Oelstromes eine mit einem Elektromotor angetriebene Hydraulikpumpe vonnöten ist, und die Umsetzung in zwei mit unterschiedlicher Winkelgeschwindigkeit erfolgende Drehungen mit zwei Hydraulikmotoren erfolgen muss.

Der vorliegenden Erfindung liegt die Aufgabe zugrunde, eine inversionskinematische Mischmaschine mit einem neuen Antrieb zu schaffen.

Die Lösung der gestellten Aufgabe ist wiedergegeben im Patentanspruch 1, in bezug auf die weitere Ausgestaltung in den Patentansprüchen 2 bis 9. Anhand der Zeichnungen ist der Erfindungsgegenstand näher erläutert. Es zeigen:

Fig. 1    ein erstes Ausführungsbeispiel an einer inversionskinematischen Mischmaschine,

Fig. 2    ein zweites Ausführungsbeispiel hinsichtlich der mechanischen Ausgestaltung,

Fig. 3    eine prinzipielle Darstellung zur Kinematik,

Fig. 4    eine Darstellung der Winkelgeschwindigkeiten der Antriebsachsen,

Fig. 5    ein erstes Ausführungsbeispiel hinsichtlich der elektrischen Schaltung,

Fig. 6    ein Ausführungsbeispiel des Stromreglers,

Fig. 7    ein zweites Ausführungsbeispiel hinsichtlich der elektrischen Schaltung.

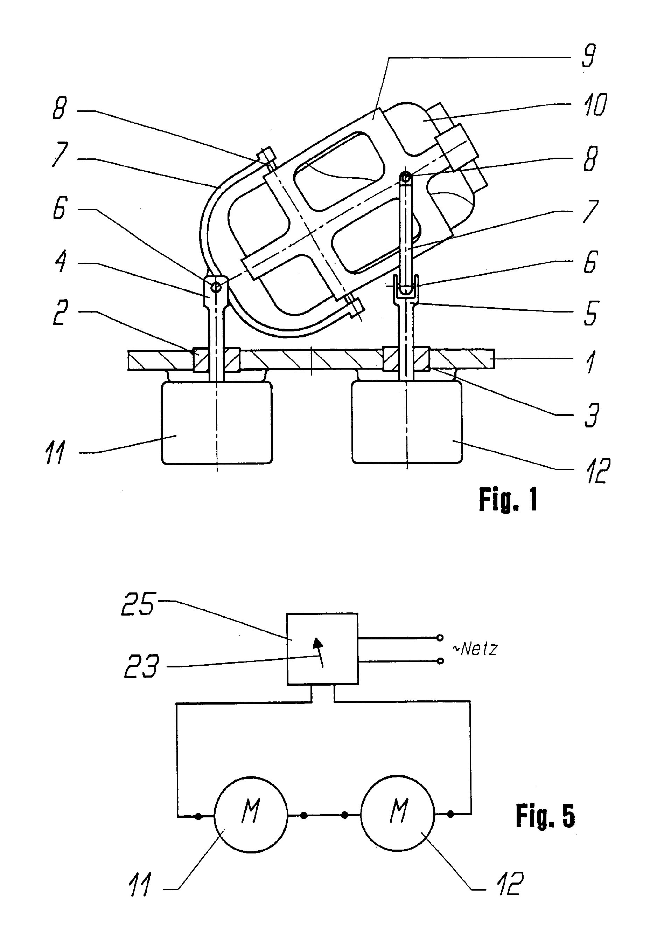

Fig 1 zeigt die erfindungsgemässe Vorrichtung in einem ersten Ausführungsbeispiel. Ein Gestell 1 trägt zwei Lager 2, 3, in welchen zwei parallele Achsen 4, 5 drehbar sind. An ihren - in Fig. 1 - oberen Enden sind die Achsen 4, 5 als Schwenklager 6 ausgebildet für zwei Gabeln 7. Die Drehachsen der beiden Schwenklager 6 stehen in der in Fig. 1 dargestellten Position der Vorrichtung senkrecht zueinander. Diese relative Lage gilt immer dann, wenn eine der beiden Drehachsen parallel steht zur Zeichnungsebene, da die beiden Drehwinkel $\phi_1$ und $\phi_2$ der beiden Achsen 4, 5 immer die Beziehung erfüllen:

$$\tan\phi_1 = 1/2 \; \tan\phi_2{}^*,$$

sofern beide Winkel bezüglich der Zeichenebene gemessen werden. Durch die Gabeln 7 verlaufen Drehachsen 8, welche einerseits zueinander, anderseits auch zu den respektiven Schwenkachsen 6 senkrecht stehen. So ergibt sich eine dreigliederige Gelenkkette, also eine halbe Gelenkkette nach Bricard, die zwischen vier jeweils senkrecht zueinander stehenden Gelenken liegt, nämlich zwischen dem Schwenklager 6 an der Achse 4, der Achse 8 der linken Gabel 7, der Achse 8 der rechten Gabel 7 und dem Schwenklager 6 an der Achse 5. Die Abstände zwischen den Achsen 8 zueinander und der zugehörigen Schwenklager 6 und den Achsen 8 sind gleich gross und gleich dem $\sqrt{3/2}$-fachen des Abstandes der Achsen 4, 5; dies entspricht den Bricard-Bedingungen, und insbesondere jenen, die Paul Schatz für solche Maschinen formulierte.

Die beiden Achsen 8 sind an einem Korb 9 befestigt, der zur Aufnahme eines Mischbehälters 10 dient.

Im Ausführungsbeispiel gemäss Fig. 1 sind zwei Elektromototren 11, 12 am Gestell 1 befestigt und direkt auf die Achsen 4, 5 aufgeflanscht. Die anhand von Fig. 1 beschriebene inversionskinematische Mischmaschine ist jedoch lediglich im Sinne eines Beispiels zu verstehen. Die Ausgestaltung der mit 6 bis 9 bezeichneten Maschinenelemente ist, solange die Bricard-Bedingungen eingehalten sind, ohne Belang und ohne Auswirkung auf den Erfindungsgedanken.

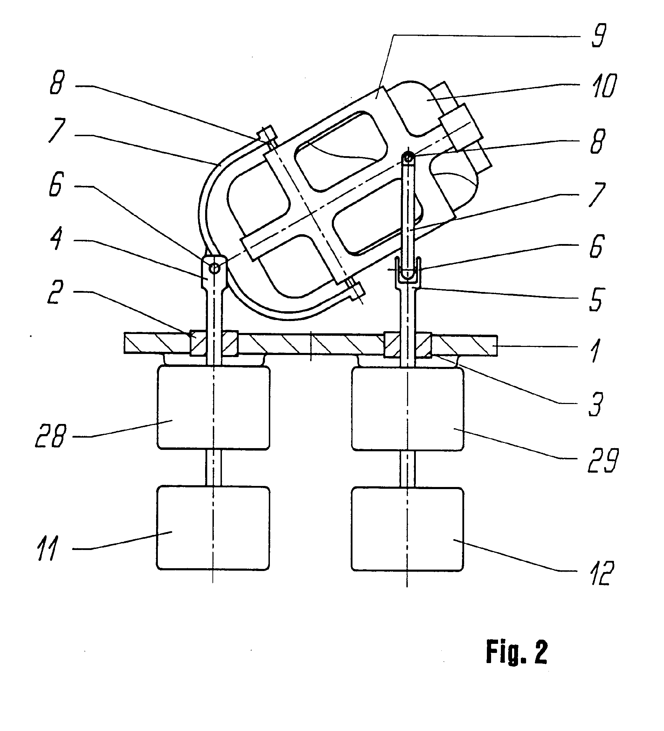

Ein zweites Ausführungsbeispiel hinsichtlich der mechanischen Ausgestaltung der Erfindung zeigt Fig. 2. Zwischen die Elektromotoren 11, 12 und die Achsen 4, 5 sind zwei Untersetzungsgetriebe 28, 29 eingeschaltet, die in Fig. 2 lediglich schematisch dargestellt sind. Im Sinne der Erfindung sind Untersetzungsgetriebe, wie Zahnriemenantriebe, Zahnradgetriebe, Schneckenantriebe oder weitere, die den erfindungsgemässen Zweck des Untersetzens von Drehgeschwindigkeiten erfüllen.

In diesem Ausführungsbeispiel sind, gegenüber von jenem von Fig. 1, schneller laufende Elektromotoren 11,

_____
* Paul Schatz, Rythmusforschung und Tecknik, Stuttgart 1975.

12 vorzusehen, die gleichzeitig kleinere Drehmomente aufzubringen haben.

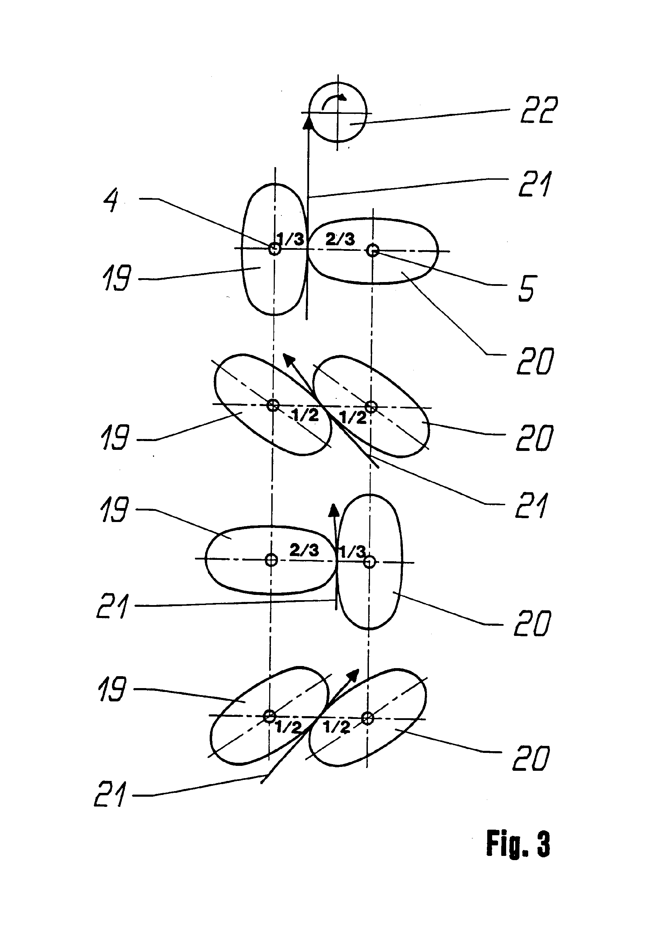

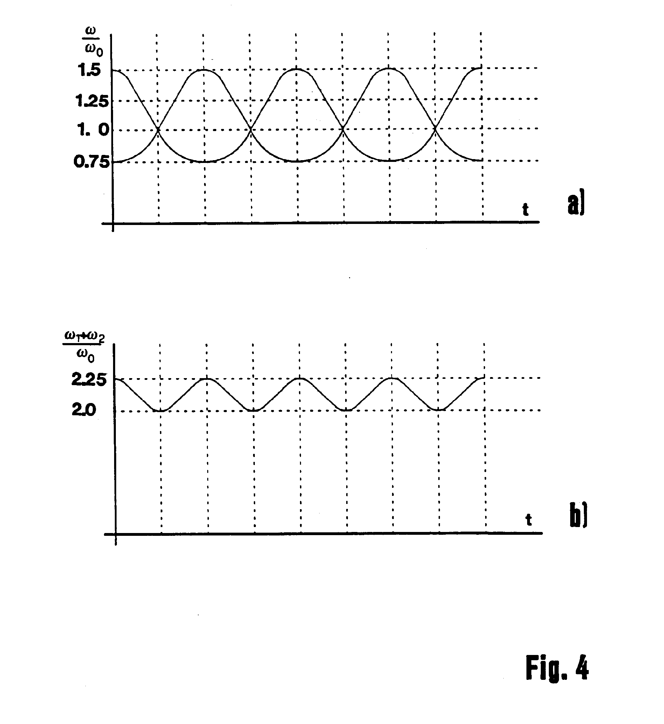

Bevor auf die schaltungstechnische Seite der Erfindung näher eingegangen wird, soll in Fig. 3 und 4 die bekannte Kinematik der Vorrichtung eingehender beschrieben werden.

Fig. 3 zeigt ein mechanisches Ersatzschema des Antriebs dieser inversionskinematischen Mischmaschine. In der gleichen Abbildungsposition, wie in Fig. 2 seien auf die Achsen 4, 5 zwei Ovalräder 19, 20 aufgeflanscht, die mit ideal rauhen Oberflächen als Reibräder ausgebildet sind und untereinander in dauerndem Kontakt stehen. Sie sind genaues Abbild der Kinematik der Achsen 4, 5; ihre Umfangsgeschwindigkeiten sind gleich, und ihre Form lässt sich aus der Beziehung

$$\tan \phi_1 = 1/2 \tan \phi_2$$

und der Gleichheit und Konstanz der Umfangsgeschwindigkeit ermitteln. Denkt man sich nun ein endloses Band 21 mit konstanter Schnelligkeit und immer in der Richtung der gemeinsamen Tangente der Ovalräder 19, 20 hindurchgezogen und über ein rundes Rad 22 geführt, so rotiert dieses Rad 22 mit einer konstanten Winkelgeschwindigkeit $\omega_0$. Der Abstand der Achsen 4, 5 sei auf $\underline{1}$ normiert. Dieses $\omega_0$ ist die in Fig. 4 verwendete Bezugsgrösse.

Wie man aus Fig. 3 sieht, die eine halbe Umdrehung der Ovalräder 19, 20 und damit der Achsen 4, 5 in vier Winkelpositionen darstellt, rotieren die Achsen 4, 5 ungleichförmig mit einer doppelten Periodizität pro Umdrehung.

In Fig. 4 sind die Winkelgeschwindgkeiten der Achsen 4,5 mit der Winkellage $\phi_0$ des Rades 22 und dessen Winkelgeschwindigkeit $\omega_0$ als Bezugsgrössen dargestellt; $\omega_1$ ist dabei die Winkelgeschwindigkeit der Achse 4, $\omega_2$ jene der Achse 5, obwohl periodisch zwischen 0,75 und 1,5, sind die Kurven $\omega_1/\omega_0$ und $\omega_2/\omega_0$ keine reinen harmonischen Funktionen, wohl aber mit einem grossen Anteil an solchen; entsprechend zeigt die Summe $\omega_1/\omega_0 + \omega_2/\omega_0$ doppelte Periodizität, hingegen eine verhältnismässig kleine Schwankungsbreite zwischen 2,0 und 2,25. Bezüglich des Mittelwertes von $\omega_1/\omega_0$ und $\omega_2/\omega_0$ beträgt die Schwankung also bloss etwa 6%. Nimmt man die Kehrwerte der $\omega_j/\omega_0$, so erhält man, wiederum normiert auf das Rad 22, im wesentlichen die an den Achsen 4, 5 wirkenden Drehmomente; die zwei Kurven von Fig. 4a erscheinen um $\pi/2$ phasenverschoben. Wegen der doppelten Periodizität der Summenkurve von Fig. 4b geht diese in sich selbst über.

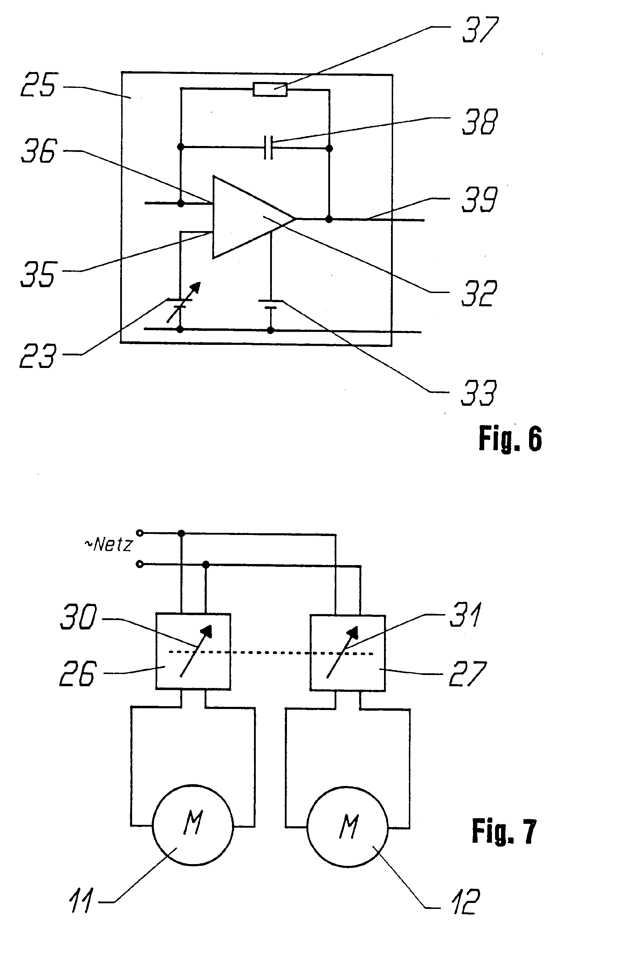

Die erfindungsgemässe Konsequenz besteht nun darin, statt jeder Einzelwinkelgeschwindigkeit eine Grösse zu regeln, die der Summe der Winkelgeschwindigkeiten entspricht. Fig. 5 zeigt, wie dies erfindungsgemäss dadurch realisiert werden kann, dass für die zwei Elektromotoren 11, 12 Motoren vom Gleichstrom-Typ gewählt werden, die in Serie geschaltet und von einer Konstant-Stromquelle (Regler) 25 gespeist werden.

Die Grösse des Stromes bestimmt die Antriebsdrehmomente und wird mittelbar über ein Stellelement 23 eingegeben.

Die Schaltung gemäss Fig. 5 ist gleichermassen für das mechanische Ausführungsbeispiel gemäss Fig. 1 oder Fig. 2 gültig.

Bei Gleichstrommotoren entspricht der Strom dem Antriebsdrehmoment, der Spannungsabfall der Drehgeschwindigkeit. Den Ausgleich zwischen den von den Motoren 11, 12 gelieferten Antriebsdrehmomenten und den von der Mischvorrichtung mechanisch benötigten erfolgt über die die Inversionskinematik definierenden Maschinenelemente, welche mit 4 bis 9 bezeichnet sind.

Fig. 6 ist eine schematische Darstellung des Reglers 25, bzw. der Regler 26, 27 aus Fig. 7. Ein Verstärker 32 wird von einer Stromquelle 33 gespeist und weist zwei Eingänge 35, 36 auf. Am Eingang 35 liegt die Referenzspannung $U_{soll}$, welche mit dem Stellelement 23, bzw 30, 31 vorgegeben wird. Der zweite Eingang 36 wird über einen Widerstand 37 mit der Spannung $U_{ist}$ gespeist, welche an den Elektromotoren 11, 12 anliegt. Zusammen mit einem Kondensator 38 bildet der Widerstand 37 ein rückkoppelndes RC-Glied, dessen Zeitkonstante gross bemessen ist gegenüber der Periodendauer der Summenkurve aus Fig. 4b bei der kleinsten vorgesehenen Drehzahl. Damit wird ein Nachregeln der kleinen Schwankungen in Strom und Spannung verhindert, welche sich aus dem diesem Maschinentyp eigenen Ungleichlauf ergeben. Der Verstärker ist mit einem Ausgang 39 versehen, der den der Spannung $U_{ist}$ entsprechenden Strom abgibt. Beim Anlaufen der Elektromotoren 11, 12 ist - wegen der grossen Differenz von $U_{soll}$ und $U_{ist}$ der Strom am Ausgang 39 gross und bewirkt damit die notwendigen grossen Anlauf-Drehmomente. Während des Betriebes der Mischmaschine sind durch die Antriebsdrehmomente nur die Reibungsverluste auszugleichen; die Drehmomente werden entsprechend kleiner.

Eine Variante zu Fig. 5 ist in Fig. 7 dargestellt. Hier wird der Elektromotor 11 von einer Konstantstromquelle (Regler) 26, der Elektromotor 12 von einer Konstantstromquelle (Regler) 27 gespeist. Jeder Regler 26, 27 weist ein Stellelemente 30, 31 auf, mit denen der Strom eingestellt wird. Die Stellelemente 30, 31 sind jedoch, wie in Fig. 7 dargestellt, zwangsgekoppelt.

**Patentansprüche**

1. Inversionskinematische Mischmaschine mit zwei parallelen Antriebsachsen (4, 5) und einer halben Bricardschen Gelenkkette, dadurch gekennzeichnet, dass jede Antriebsachse (4, 5) durch einen eigenen Elektromotor (11, 12) angetrieben wird und diese Elektromotoren (11, 12) elektrisch in Serie geschaltete Gleichstrommotoren sind.

2. Vorrichtung nach Patentanspruch 1, dadurch gekennzeichnet, dass der erste Elektromotor (11) die erste Antriebsachse (4), der zweite Elektromotor (12) die zweite Antriebsachse (5) direkt antreibt.

3. Vorrichtung nach Patentanspruch 1, dadurch gekennzeichnet, dass zwei Untersetzungsgetriebe (28, 29) vorhanden sind, wovon eines zwischen dem ersten Elektromotor (11) und der ersten Antriebsachse (4) und eines zwischen dem zweiten Elektromotor (12) und der zweiten Antriebsachse (5) eingeschaltet ist.

4. Vorrichtung nach Patentanspruch 3, dadurch gekennzeichnet, dass die Untersetzungsgetriebe (28, 29) Zahnradgetriebe sind.

5. Vorrichtung nach Patentanspruch 3, dadurch gekennzeichnet, dass die Untersetzungsgetriebe (28, 29) Zahnriemenantriebe sind.

6. Vorrichtung nach Patentanspruch 3, dadurch gekennzeichnet, dass die Untersetzungsgetriebe (28, 29) Schneckengetriebe sind.

7. Vorrichtung nach Patentanspruch 1, dadurch gekennzeichnet, dass ein einziger Regler (25) mit einem Stellelement (23) vorhanden ist, welcher den beide Elektromotoren (11, 12) durchfliessenden Strom liefert.

8. Vorrichtung nach Patentanspruch 1, dadurch gekennzeichnet, dass

   - zwei Regler (26, 27) vorhanden sind mit Stellelementen (30, 31), welche zwangsgekoppelt sind,
   - der erste Elektromotor (11) vom ersten Regler (26), der zweite Elektromotor (12) vom zweiten Regler (27) gespeist wird.

9. Vorrichtung nach Patentanspruch 7 oder 8, dadurch gekennzeichnet, dass die Regler (25, 26, 27) jeweils bestehen aus einem Verstärker (32) mit zwei Eingängen (35, 36) und einem Ausgang (39), wobei der erste Eingang (35) von einer durch das Stellglied (23, 30, 31) definierten Referenzspannung $U_{soll}$ gespeist wird, der zweite Eingang (36) über ein aus einem Widerstand (37) und einem dazu parallelgeschalteten Kondensator (38) gebildetes RC-Glied vom Ausgang (39) durch die Spannung $U_{ist}$ gespeist wird, und die Speisung des Verstärkers (32) aus einer Stromquelle (33) erfolgt.

## Claims

1. An inversion-kinematic mixing machine with two parallel drive axles (4, 5) and a semi-Bricard link chain, characterised in that each drive axle (4, 5) is driven by its own electric motor (11, 12) and these electric motors (11, 12) are direct-current electric motors connected in series.

2. A device according to patent claim 1, characterised in that the first electric motor (11) directly drives the first drive axle (4) and that the second electric motor (12) directly drives the second drive axle (5).

3. A device according to patent claim 1, characterised in that two reducing gears (28, 29) are provided, one of which is interposed between the first electric motor (11) and the first drive axle (4) and the other between the second electric motor (12) and the second drive axle (5).

4. A device according to patent claim 3, characterised in that the reducing gears (28, 29) are gear wheel drives.

5. A device according to patent claim 3, characterised in that the reducing gears (28, 29) are toothed belt drives.

6. A device according to patent claim 3, characterised in that the reducing gears (28, 29) are worm drives.

7. A device according to patent claim 1, characterised in that a single controller (25) with one control element (23) is provided and supplies both electric motors (11, 12) with flow-through current.

8. A device according to patent claim 1, characterised in that

   - two controllers (26, 27) are provided with control elements (30, 31) which are necessarily coupled,
   - the first electric motor (11) is fed by the first controller (26) and the second electric motor (12) is fed by the second controller (27).

9. A device according to either patent claim 7 or 8, characterised in that the controllers (25, 26, 27) in each case comprise an amplifier (32) with two inputs (35, 36) and one output (39), with the first input (35) fed with a reference voltage $U_{desired}$ defined by the controlling element (23, 30, 31) and the second input (36) supplied with a voltage $U_{actual}$ via an RC-element comprising a resistor (37) and a capacitor (38) connected in parallel therewith, and that the amplifier (32) is supplied from a current source (33).

## Revendications

1. Mélangeur à inversion cinématique comportant deux arbres de commande parallèles (4, 5) et une demi-chaîne articulée Bricard, caractérisé en ce que chaque arbre de commande (4, 5) est entraîné par un moteur électrique propre (11, 12) et ces moteurs électriques (11, 12) sont des moteurs à courant continu à montage électrique en série.

2.   Dispositif selon la revendication 1, caractérisé en ce que le premier moteur électrique (11) entraîne directement le premier arbre de commande (4), et le second moteur électrique (12) le second arbre de commande (5).

3.   Dispositif selon la revendication 1, caractérisé en ce qu'il est prévu deux démultiplicateurs (28, 29), l'un étant intercalé entre le premier moteur électrique (11) et le premier arbre de commande (4), tandis que l'autre est intercalé entre le second moteur électrique (12) et le second arbre de commande (5).

4.   Dispositif selon la revendication 3, caractérisé en ce que les démultiplicateurs (28, 29) sont des engrenages.

5.   Dispositif selon la revendication 3, caractérisé en ce que les démultiplicateurs (28, 29) sont des transmissions à courroie dentée.

6.   Dispositif selon la revendication 3, caractérisé en ce que les démultiplicateurs (28, 29) sont des transmissions à vis sans fin.

7.   Dispositif selon la revendication 1, caractérisé en ce qu'il est prévu un seul régulateur (25) comportant un élément de réglage (23), qui fournit le courant traversant les deux moteurs électriques (11, 12).

8.   Dispositif selon la revendication 1, caractérisé

-   en ce qu'il est prévu deux régulateurs (26, 27) comportant des éléments de réglage (30, 31) qui sont reliés par un accouplement forcé,
-   en ce que le premier moteur électrique (11) est alimenté par le premier régulateur (26), et le second moteur électrique (12) par le second régulateur (27).

9.   Dispositif selon les revendications 7 ou 8, caractérisé en ce que les régulateurs (25, 26, 27) se composent chacun d'un amplificateur (32) comportant deux entrées (35, 36) et une sortie (39), la première entrée (35) étant alimentée par une tension de référence $U_{soll}$ définie par l'organe de réglage (23, 30, 31) tandis que la seconde entrée (36) est alimentée à partir de la sortie (39) par la tension $U_{ist}$ par l'intermédiaire d'un circuit RC formé d'une résistance (37) et d'un condensateur (38) monté en parallèle par rapport à celle-ci, et l'alimentation de l'amplificateur (32) se faisant à partir d'une source de courant (33).

9

10

8

8

7

7

6

6

4

5

2

1

3

11

12

**Fig. 1**

25

23

~Netz

M

M

**Fig. 5**

11

12

**Fig. 2**

**Fig. 3**

Fig. 4

**Fig. 6**

**Fig. 7**